# FASCICULE DE BREVET EUROPEEN

(11) **EP 2 860 600 B1**
(45) Date de publication et mention de la délivrance du brevet: **31.08.2022**
(21) Numéro de dépôt: 14185148.5
(22) Date de dépôt: 17.09.2014
(51) Int. Cl.: G05B 19/418

(54) **Système de commande d'un outil industriel en définissant son volume d'utilisation par apprentissage**
Steuerungssystem für ein industrielles Werkzeug mit Festlegung seines Arbeitsraumes durch Anlernen
System for controlling an industrial tool by defining its volume of use by learning

(30) Priorité: 26.09.2013 FR 1359308
(43) Date de publication de la demande: 15.04.2015
(73) Titulaire: Etablissements Georges Renault, 44800 Saint Herblain (FR)
(72) Inventeur: Macquet, Laurent, 44240 LA CHAPELLE SUR ERDRE (FR); Pineau, Laurent, 44100 NANTES (FR); Butstrean, Gatien, 44000 NANTES (FR); Marembert, Benoit, 44810 LA CHEVALLERAIS (FR)
(74) Mandataire: Vidon Brevets & Stratégie

(56) Documents cités:
- WO-A1-2013/012098
- US-A1- 2004 193 413
- US-A1- 2010 057 243

## Description

### 1. Domaine de l'invention

L'invention concerne le contrôle d'outil portable industriel et la capacité de vérifier l'endroit où il est utilisé. Plus précisément, l'invention concerne la détermination de zones d'utilisation par un procédé d'apprentissage se servant de l'outil comme un moyen de localisation.

### 2. Art antérieur

Le contexte de l'invention est celui de l'utilisation d'outil, tel qu'un outil de vissage dans le cadre de la production industrielle et en particulier dans celui de l'industrie automobile. Ce type d'industrie utilise des systèmes de vissage permettant un traçage de la qualité de toutes les opérations de production. Ceci a amené le développement de systèmes de vissage capable d'assurer des cycles de vissage intégrant de multiples étapes faisant varier des paramètres de vissage tels que :
- la vitesse de rotation (différente si phase de pré-vissage ou de vissage).
- la stratégie de serrage: détermination du couple, angle, limite élastique suivant les situations.

Ces systèmes de vissage peuvent aussi être programmés pour fournir un compte rendu de vissage global pour un groupe de plusieurs serrages et pour réaliser un enchaînement de différents vissages avec différentes stratégies de serrage. Ces systèmes de vissage permettent aussi d'exporter sur les réseaux informatiques de ces entreprises les résultats de serrage, couple, angle, intensité moteur, etc. Les systèmes de vissage actuellement sur le marché mémorise les paramètres d'utilisation et les éventuels compte-rendu d'exécution, et les associe aux pièces produites. Il est ainsi possible de tracer le procédé de fabrication et de retrouver par la suite les caractéristiques de production d'une pièce.

Les visseuses portables étaient jusqu'à une récente époque reliées par un câble à un contrôleur fournissant à l'outil la puissance électrique nécessaire et assurant une communication pour le transfert des paramètres permettant le pilotage de l'outil en terme de stratégie de vissage et l'exportation des résultats vers les réseaux informatiques. Le câble limite l'utilisation des visseuses à une zone limitée au poste de travail ce qui empêchait de fait la visseuse d'être utilisée sur une autre voiture que celle se trouvant au poste de travail de la visseuse. Avec les outils à batterie, le risque de voir un outil être déplacé d'un poste à l'autre et utilisé à mauvais escient existe.

Pour résoudre cet inconvénient, des systèmes de localisation d'outils ont été développés et sont utilisés pour désactiver le fonctionnement d'une visseuse en dehors d'une zone donnée. Différentes technologies de localisation sont commercialisées : ultrasons, infrarouge, radio caméra etc. La précision de ces systèmes de localisation a été améliorée pour restreindre la zone d'activation de la visseuse à une vis donnée soit une taille de zone de l'ordre de 15mm.

Les 2 modes de détection suivants demeurent utilisés : soit appliqué à un volume englobant une voiture et appelé localisation, soit appliqué à un volume limité à un point de vissage et appelé positionnement.

Le document US 2010/057243 - STENCEL décrit un outil manipulable à la main possédant un moyen de géolocalisation. Une Interface graphique (GUI) prévient l'opérateur que la position correcte selon la séquence est atteinte. Cette interface peut être loin de l'outil à géolocaliser ce qui oblige l'opérateur à se déplacer.

Un problème qui est ici posé est relatif à la méthode utilisée pour régler le système de localisation afin qu'il détecte les zones d'utilisation d'un outil en fonction des pièces assemblées par cet outil. Les méthodes habituelles consistent à rentrer manuellement les coordonnées de points caractéristiques définissant le volume choisi, par exemple une sphère, parallélépipède structure prismatique, etc. Par exemple, une sphère est définie dans l'espace par son centre (3 coordonnées X, Y et Z) et par n'importe quel point définissant son rayon (3 autres coordonnées X, Y et Z).

Selon que les outils se trouvent à l'intérieur ou non des zones virtuelles, le système de commande autorise ou non les outils à effectuer des actions.

### 3. Inconvénient de l'art antérieur

La définition des zones d'utilisation par l'introduction de valeurs numériques au sein d'un menu est une opération longue, donc chère et peu flexible. Dans ces circonstances, il est intéressant de trouver une autre méthode faisant directement intervenir l'outil.

### 4. Objectifs de l'invention

L'invention a notamment pour objectif de pallier les inconvénients de l'art antérieur. Un objectif de la présente invention consiste à proposer un système de commande d'outil industriel qui vérifie que l'outil se situe bien dans un volume autorisé.

La présente invention permet notamment de définir rapidement et simplement des zones d'utilisation de cet outil.

### 5. Exposé de l'invention

Ces objectifs, ainsi que d'autres qui apparaîtront par la suite, sont atteints grâce à l'invention qui a pour objet un système de commande d'un outil portable associé à un contrôleur tel que revendiqué à la revendication 1

De cette manière, le système de commande vérifie que l'outil se situe bien dans une zone de fonctionnement autorisée et programme l'outil en conséquence. Le système de commande se sert de l'outil comme moyen de localisation afin de déterminer des zones d'utilisation, permettant ainsi une simplicité et une grande souplesse d'utilisation. Les commandes pour lancer les mesures de localisation sont avantageusement introduites au niveau de l'outil.

Selon un mode particulier de réalisation, le moyen d'introduction_de commande est du type pris dans l'ensemble suivant : microphone, émetteur récepteur RF-ID, interrupteur, contact à effet Hall. De cette manière, il est possible d'adapter l'interface de commande au type d'outil et d'environnement industriel.

Selon un mode particulier de réalisation, le système de commande comporte un moyen d'association de paramètres d'utilisations à au moins deux volumes d'utilisation, le système en mode utilisation transmettant les paramètres d'utilisation associés au volume d'utilisation où se situe l'outil lorsqu'un utilisateur active la commande. De cette manière, les paramètres d'utilisation sont adaptés à l'endroit précis ou l'outil se trouve, et l'utilisateur n'a pas besoin de changer la programmation lorsqu'il le déplace.

Selon un mode particulier de réalisation, le moyen d'association définit un ordonnancement des opérations à effectuer par ledit outil, le système n'autorisant cet outil à fonctionner que si l'ordre des opérations est respecté. De cette manière, il est possible de définir un séquencement des opérations à effectuer et à interdire le fonctionnement de l'outil lorsque ce séquencement n'est pas respecté.

Selon un mode particulier de réalisation, le système de commande comporte un moyen de sélection d'une forme géométrique tridimensionnelle parmi une pluralité de formes prédéfinies par le système définissant la forme d'un volume d'utilisation, les positions de l'outil acquises en mode apprentissage définissant les dimensions numériques de ladite forme. De cette manière, l'utilisateur peut choisir plusieurs formes tridimensionnelles où l'outil doit se trouver

Selon un mode particulier de réalisation la forme géométrique tridimensionnelle est sélectionnée dans un ensemble comprenant au moins une sphère et une colonne ayant pour base un parallélogramme. De cette manière, l'utilisateur peut choisir la forme parmi celles acceptées par le système.

Selon un mode particulier de réalisation, le système de commande comporte un moyen de réception d'un signal émis par l'outil, tel qu'un signal ultrasonore, et reçu par un moyen de réception capable de déterminer la position de l'émission du signal. De cette manière, l'outil peut être facilement localisé.

Selon un mode particulier de réalisation, le système de commande comporte un moyen d'émission d'un signal lumineux et/ou sonore lorsqu'un utilisateur active la commande en mode utilisation et que ledit outil se situe dans un volume autre que les volumes d'utilisation préalablement définis. De cette manière, l'utilisateur peut savoir immédiatement que son outil n'est pas dans une position où il peut fonctionner.

Selon un mode particulier de réalisation, le système de commande comporte un moyen de comparaison des volumes d'utilisation ainsi définis. Ce moyen de comparaison émet un message d'alarme lorsque deux volumes d'utilisation associés à des paramètres d'utilisations différents se recoupent. De cette manière, il est possible d'éviter des conflits de programmation.

### 6. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 montre un exemple d'un système de commande d'un outil industriel avec géolocalisation,
- la figure 2 présente un exemple d'ordinogramme des étapes pour la définition d'un volume d'utilisation d'un outil industriel,
- la figure 3 présente un exemple d'apparence d'écran pour la maintenance d'un parc d'outils industriels.

### 7. Description d'un mode de réalisation de l'invention

### 7.1 Principe général

La présente invention concerne un système de commande d'un outil portable industriel associé à un contrôleur. Le système comprend une interface utilisateur permettant d'introduire des paramètres d'utilisation de l'outil, et un moyen de géolocalisation dudit outil. L'outil portable dispose d'une commande, typiquement une gâchette, déclenchant son utilisation selon au moins un des paramètres d'utilisation introduits. Le système de commande peut commuter selon deux modes de fonctionnement « apprentissage » et « utilisation ». Le système en mode apprentissage fait l'acquisition de la position de l'outil lors de chaque activation de la commande en inhibant le fonctionnement de l'outil, les différentes positions définissant au moins un volume d'utilisation dudit outil. Le système en mode utilisation n'autorise l'outil à fonctionner lorsqu'un utilisateur active la commande que si cet outil se situe dans l'au moins un volume d'utilisation préalablement défini. De cette manière, le système de commande vérifie que l'outil se situe bien dans une zone de fonctionnement autorisé et programme l'outil en conséquence.

### 7.2 Description d'un système de commande d'un outil industriel

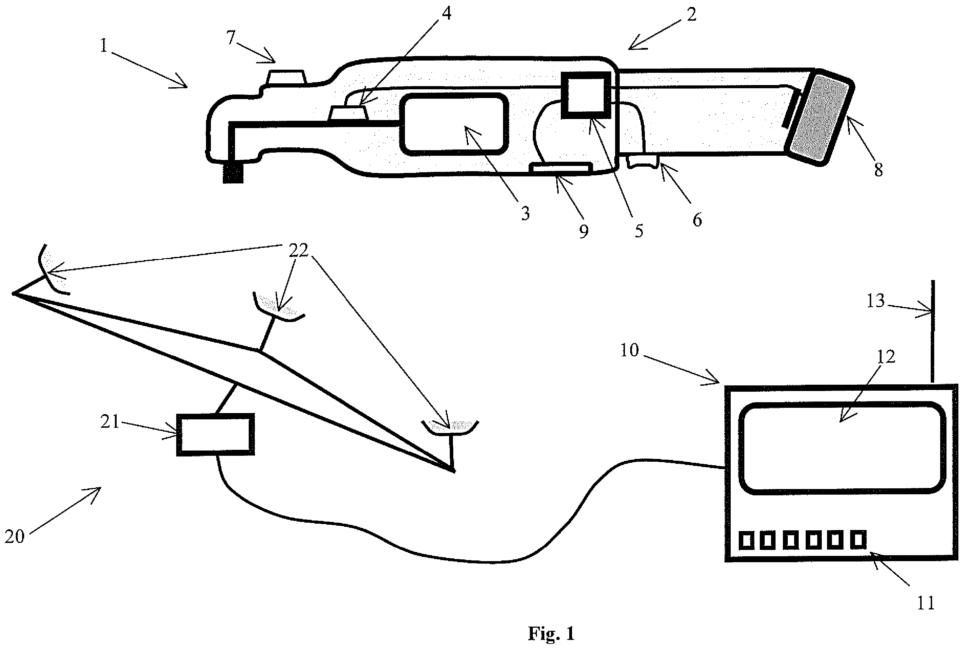

La **Fig.1** décrit un exemple d'un système de commande permettant de contrôler le fonctionnement d'un outil en utilisant des techniques de géolocalisation. Selon un mode préféré de réalisation, le système comporte un outil industriel 1, un contrôleur 10 destiné à contrôler le fonctionnement de cet outil et un dispositif de géolocalisation 20.

Un outil industriel est par exemple une visseuse électrique à serrage asservi qui est classiquement mise en oeuvre pour assurer, au cours d'une opération de vissage, le serrage d'un assemblage, c'est à dire la liaison de plusieurs pièces par exemple au moyen d'une vis serrée à un couple dont la valeur est choisie de façon que l'assemblage soit suffisamment rigide mais avec un couple maximal pour ne pas endommager ladite vis. De ce fait, le couple de serrage cible est un exemple de paramètres d'utilisation de l'outil. D'autres paramètres d'utilisation peuvent être définis tels que la courbe de montée vers le couple de serrage cible ou la valeur maximale d'intensité de la motorisation de l'outil.

Une telle visseuse comprend généralement un carter 2 comprenant une poignée et contenant notamment les éléments suivants :
- un moteur 3 muni d'un rotor animant un organe terminal susceptible de porter un embout de vissage,
- différents capteurs 4 dont un capteur de couple notamment destiné à détecter l'atteinte d'un couple objectif,
- un moyen de contrôle 5 commandant en continu le moteur et recevant des capteurs 4 des informations sur l'opération en cours,
- un moyen de commande de l'outil 6 permettant à un opérateur d'utiliser cet outil, ce moyen de commande est typiquement une gâchette électrique,
- un émetteur de géolocalisation 7 fixé à un endroit précis de l'outil, de préférence à proximité immédiate de l'embout de vissage de façon à localiser avec précision l'endroit où le travail de cet outil doit s'effectuer,
- une batterie 8 (une variante non représentée sur la **Fig. 1** consiste à doter l'outil d'un câble d'alimentation relié au contrôleur 10),
- un module émetteur récepteur 9 permettant la communication radio (réseau Wifi par exemple) de façon bidirectionnelle avec son contrôleur pour recevoir notamment les paramètres d'utilisation.

Le contrôleur 10 comporte une unité centrale associée à un programme d'exécution, et une interface utilisateur pour gérer un moyen d'introduction de commande 11 (clavier, écran tactile, souris, ...), un moyen d'affichage 16 (écran, afficheur, voyant lumineux) et éventuellement, un moyen d'émission d'un signal sonore sur une fréquence audible. Selon un mode préféré de réalisation, le contrôleur 10 comporte un moyen de communication radio 13 avec l'outil. Selon un autre mode de réalisation, le contrôleur 10 est relié à l'outil par un câble qui lui transmet l'énergie de fonctionnement, ce câble comportant également des moyens de transmission de données telles que notamment les paramètres d'utilisation.

Selon un exemple préféré de réalisation, le système de commande dispose d'un dispositif de géolocalisation 20 permettant la localisation dans l'espace d'un ou plusieurs outils 1. Selon un mode préféré de réalisation, le dispositif de localisation utilise une émission radiofréquence. La discrimination entre plusieurs outils est réalisée par un découpage temporel, chaque émetteur de géolocalisation 7 émettant durant une période de temps prédéfini et distinct des autres outils. Cet intervalle de temps alloué constitue une fraction d'une période de temps répétée de façon périodique, la position de chaque outil est déterminée séquentiellement. Dans ce mode de réalisation, la synchronisation entre les différents émetteurs et le récepteur s'effectue par une communication infrarouge bidirectionnelle.

Selon autre mode de réalisation, le dispositif de géolocalisation utilise des signaux ultrasonores. Dans ce cas, l'émetteur de géolocalisation 7 émet des signaux ultrasonores de très courtes durées. Les ondes sonores sont reçues par trois microphones 22 disposés aux trois sommets d'un support en forme de triangle. Les signaux reçus par les trois microphones sont analysés par un module de contrôle 21. En fonction des moments de réception par chaque microphone de chaque signal ultrasonore, le module de contrôle 21 calcule les décalages temporels et, opérant par triangulation, détermine la position précise de l'émetteur 7 par rapport aux trois microphones. Avantageusement, les signaux ultrasonores émis par le module émetteur 7 sont modulés en fonction d'un identifiant d'émetteur. De cette manière, il n'y a pas besoin d'une liaison bidirectionnelle entre les émetteurs et les récepteurs, le dispositif de géolocalisation 20 peut discriminer plusieurs émetteurs placés sur différents outils et ainsi dresser une cartographie de la position des outils 1 dans l'espace.

Selon un mode préféré de réalisation, le dispositif de géolocalisation 20 communique par une liaison filaire avec le contrôleur 10 pour lui transmettre la position dans l'espace de chaque outil. Selon deux variantes de réalisation, la communication s'effectue par radio, ou le dispositif de géolocalisation est intégré au contrôleur. La technique de géolocalisation utilise selon l'exemple préféré de réalisation des ultrasons, l'invention couvre d'autres techniques telles que la triangulation de signaux radio, l'utilisation d'un module GPS intégré dans l'outil, etc. Selon l'invention, en fonction de la position de l'outil sur le poste de travail, le contrôleur 10 en déduit s'il est autorisé ou non à fonctionner lorsqu'un utilisateur appuie sur la gâchette 6. Si le contrôleur détermine que l'outil n'a aucun travail à effectuer à l'endroit où il se situe actuellement alors il inhibe son fonctionnement.

Selon un mode préféré de réalisation, la programmation des volumes d'utilisation s'effectue en utilisant un ordinateur portable ou une tablette connecté à cette occasion au contrôleur 10. L'invention couvre également la variante consistant à doter le contrôleur 10 d'une interface utilisateur suffisamment ergonomique pour recevoir et enregistrer une telle programmation.

### 7.3 Description des étapes pour la mise en œuvre de l'invention

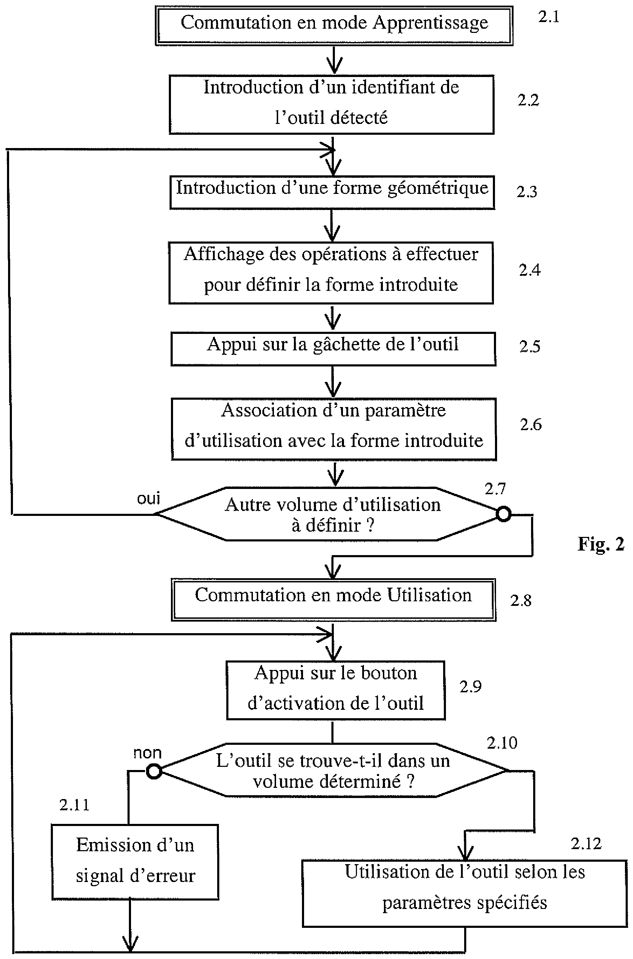

Après avoir détaillé les éléments principaux de l'invention, nous allons maintenant expliquer comment ceux-ci coopèrent. La **Fig. 2** présente un ordinogramme des principales étapes permettant d'une part de programmer des volumes d'utilisation, et d'autre part de contrôler l'utilisation de l'outil en fonction de sa présence dans les volumes d'utilisation programmés.

A l'étape 2.1, un utilisateur lance le contrôleur 10 et le positionne en mode Apprentissage. Dans ce mode, le système détermine les volumes autorisés en utilisant l'outil comme moyen de prise de points et non pour sa fonction première qui en l'occurrence, est le vissage. Le lancement du module logiciel s'effectue en introduisant une commande sur le clavier 12, ou en utilisant une souris et en cliquant sur une icône présente dans un menu affiché sur l'écran 11, en encore en appuyant sur une icône affichée sur l'écran dans le cas où ce dernier est tactile.

Puis, l'utilisateur introduit un identifiant d'un outil (étape 2.2). Cet identifiant peut être le code émis par l'émetteur de géolocalisation 7 qui est destiné à identifier un outil en particulier. Selon un perfectionnement, le système propose à l'utilisateur l'ensemble des émetteurs actuellement détectés et l'utilisateur en sélectionne un parmi ceux affichés. Ce perfectionnement évite à l'utilisateur de se tromper dans la référence d'identifiant à introduire.

A l'étape 2.3, l'utilisateur sélectionne une forme géométrique tridimensionnelle. Des exemples de telles formes sont : une sphère, une colonne passant par un parallélogramme et perpendiculaire à ce dernier, ce parallélogramme étant défini par trois points, le quatrième étant déduit des 3 premiers et de l'ordre d'introduction de ces points. Tout autre volume prismatique peut être introduit lors de cette étrape. Selon la forme sélectionnée, le système a besoin d'un certain nombre de points dans l'espace pour la caractériser. Ainsi dans le cas d'une sphère, il suffit de deux points : le centre et un point situé sur l'enveloppe de la sphère, la distance entre ces deux points détermine le rayon. Puis, le système affiche les opérations à suivre pour l'utilisateur afin de caractériser la forme géométrique sélectionnée dans l'espace (étape 2.4). Selon les indications affichées, l'utilisateur positionne l'outil aux endroits correspondant à des points caractéristiques de la forme et appuie sur le bouton d'activation 6 de l'outil pour chaque point à définir (étape 2.5). Selon un mode préféré de réalisation, l'appui sur la gâchette 6 déclenche l'acquisition des coordonnées de l'endroit précis où se trouve l'outil.

Selon la invention, le même bouton commande la mise en marche de l'outil 1 et le déclenchement d'une mesure, alors en mode apprentissage, l'appui sur le bouton d'activation ne déclenche pas le fonctionnement de l'outil mais uniquement un signal destiné au contrôleur. Le contrôleur est constamment informé de la position courante de l'outil 1 par le dispositif 20, au moment de la réception du signal de prise de mesure, le contrôleur 10 enregistre la position et associe cette position avec le point caractéristique demandé à l'écran. Par exemple, si la forme est un parallélogramme, il est nécessaire de définir au moins trois points pour caractériser une telle forme. Lorsque la forme est totalement définie par les points caractéristiques, l'utilisateur associe au volume nouvellement déterminé des paramètres d'utilisation de l'outil (étape 2.6).

A l'étape 2.7, le système demande s'il y a un autre volume d'utilisation à définir et à associer avec cet outil, et dans ce cas, l'utilisateur peut définir une autre forme géométrique en rebouclant à l'étape 2.3. Si l'ensemble des volumes d'utilisation est programmé. Le système peut basculer en mode « utilisation » (étape 2.8) et ainsi permettre le fonctionnement normal de l'outil. Lorsque à l'étape 2.9, l'utilisateur appuie sur le bouton d'activation, le contrôleur 10 enregistre la localisation de l'outil. Avantageusement, le contrôleur vérifie si l'outil se trouve dans un volume d'utilisation préalablement déterminé (étape 2.10). Si ce n'est pas le cas, le contrôleur émet un signal d'erreur (lumineux et/ou sonore) et inhibe le fonctionnement de l'outil (étape 2.11). L'utilisateur s'aperçoit immédiatement que l'outil n'est pas dans une bonne position pour être utilisé et le déplace.

Si par contre, l'outil se trouve bien dans un volume d'utilisation, alors à l'étape 2.12, le contrôleur 10 transmet au moyen de contrôle 5 les paramètres d'utilisation correspondant à ce volume d'utilisation. Le moyen de contrôle 5 commande le moteur 3 en utilisant ces paramètres et l'outil est utilisé pour sa fonction première.

### 7.4 Description des menus affichés et d'autres modes de réalisation

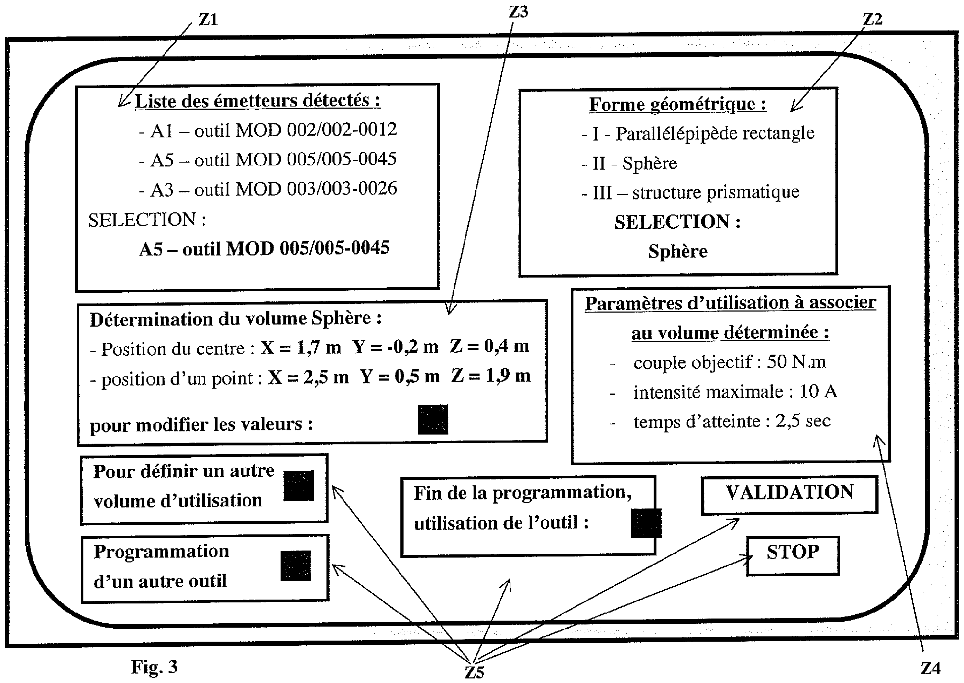

La **Fig. 3** présente un exemple d'apparence d'écran pour le contrôle de la duplication de données contenues dans des mémoires d'outils industriel. Le menu présenté comme exemple apparaît à la fin de l'étape 2.7.

Le menu illustré comporte une zone Z1 apparaissant lors de l'étape 2.2 permettant d'introduire l'identifiant de l'émetteur placé sur l'outil dont on veut définir le volume d'utilisation. Dans l'exemple, trois émetteurs sont détectés par le dispositif de localisation 20 et leurs codes (A1, A3, A5) sont présentés à l'écran. Avantageusement, le système de commande connaît les associations entre les émetteurs et les outils et affiche également le modèle et la référence de l'outil. L'utilisateur sélectionne un émetteur et la zone Z2 apparaît lui permettant de choisir une forme géométrique au premier volume d'utilisation associé à l'outil qui vient d'être spécifié. La zone Z2 propose un certain nombre de formes géométriques tridimensionnelles délimitant un volume, l'utilisateur choisit la sphère selon l'exemple illustré.

Une fois que le choix de la forme géométrique est validé, la zone Z3 apparaît permettant à l'utilisateur de définir les dimensions et la position de ce volume par rapport au dispositif de géolocalisation 20. Ce moment qui correspond aux étapes 2.4 et 2.5 permet l'apprentissage du système en utilisant l'outil comme moyen de détermination d'un point dans l'espace. La zone Z3 guide l'utilisateur dans la prise de mesure et en l'occurrence lui propose de déterminer deux points définissant la sphère. Pour aider l'utilisateur dans sa gestion des prises de mesure, le contrôleur 10 émet un signal sonore lors de chaque appui sur le bouton d'activation et l'écran est mis en jour en affichant la coordonnée géographique de l'émetteur. Les coordonnées sont les distances x, y et z selon trois axes orthonormés, le repère étant basé sur la position du récepteur de localisation.

L'utilisateur passe d'un point à un autre en appuyant sur le bouton d'activation de l'outil, en l'occurrence la gâchette. La zone Z3 propose une fois que les coordonnées ont été élaborées par le dispositif 20, de les modifier en activant une icône. Un clavier numérique apparaît alors dans une fenêtre de l'écran permettant à l'utilisateur d'introduire de nouvelles valeurs.

Lorsque le volume d'utilisation est caractérisé, la zone Z4 apparaît pour permettre à l'utilisateur d'associer à ce volume des paramètres à utiliser par l'outil lorsque celui-ci se trouve dans ce volume. Dans le cas d'une visseuse, les paramètres sont par exemple un couple objectif : 50 N.m et une vitesse de rotation de 10% de la vitesse maximum de l'outil. Lorsque les paramètres sont introduits l'utilisateur active une icône « validation » et l'association entre le code de l'émetteur, le volume d'utilisation et les paramètres d'utilisation, est enregistrée.

A ce stade, l'utilisateur peut commuter le système de commande en mode utilisation en cliquant sur une icône présente dans une zone Z5. L'utilisateur peut également répondre positivement à la question posée à l'étape 2.7 et programmer un autre volume associé à cet outil. Dans ce cas, les zones Z3 et Z4 disparaissent, la zone Z1 reste inchangée, et la zone Z2 redevient vierge de sélection.

En activant une autre icône de Z5, l'utilisateur peut également programmer un autre outil en choisissant un autre identifiant d'émetteur. Dans ce cas, les zones Z2, Z3 et Z4 disparaissent, la zone Z2 redevient vierge de sélection.

Le menu présenté par la Fig. 3 n'est donné qu'à titre d'exemple illustratif. Il est bien évident que d'autres interfaces homme machine permettent de remplir les mêmes opérations. En particulier, chaque zone peut occuper tout l'écran, chaque étape de la programmation faisant apparaître un nouveau menu. De même, l'ordre d'apparition des zones peut également être modifié.

Lorsque tous les volumes et paramètres d'utilisation à associer aux outils sont définis, l'utilisateur active une icône de Z5 et commute le système de commande en mode « utilisation ». Dans ce mode, tout appui sur le bouton d'activation déclenche le fonctionnement normal de l'outil, en l'occurrence un vissage si l'outil est une visseuse. Lors de la réception d'un signal d'activation, le contrôleur vérifie que l'outil se trouve dans un volume d'utilisation programmé. Si ce n'est pas le cas, le fonctionnement de l'outil est inhibé et le contrôleur émet un signal (lumineux et/ou sonore) informant l'utilisateur que l'outil n'est pas dans une position autorisé. Si l'outil est dans un volume d'utilisation, le contrôleur recherche dans sa mémoire les paramètres d'utilisation associés à ce volume et les transmet à l'outil qui les utilise pour son fonctionnement.

### 7.5 Perfectionnement et variantes de la présente invention

Selon un perfectionnement, le système de commande dispose de deux gammes de mesure pour géolocaliser un outil. La gamme la plus précise permet de situer l'outil à 15 millimètres environ et permet d'associer l'outil à des paramètres d'utilisation. Le même outil peut servir plusieurs fois pour un même poste de travail et de façon différente selon l'endroit où il est utilisé. La gamme la moins précise permet de déterminer uniquement si l'appareil est ou non dans un volume d'utilisation. La précision est alors de 0,5 mètre et le système de commande autorise ou non son fonctionnement sans spécifier de valeurs de paramètres d'utilisations.

Selon un autre perfectionnement, le menu du système de commande permet d'introduire un ordre dans les volumes d'utilisations et ainsi programmer un ordonnancement des opérations d'utilisations de l'outil sur le poste de travail. Dans le cas d'une visseuse, il est possible de programmer une succession précise d'opération de vissage en numérotant chaque volume d'utilisation. Si en mode utilisation, le système de commande détecte que l'outil n'est pas dans le volume défini par l'ordre des opérations alors il inhibe le fonctionnement de l'outil et le contrôleur 10 émet un signal (lumineux et/ou sonore) informant l'utilisateur que l'outil n'est pas dans la position définie par l'ordonnancement des opérations.

Selon un autre perfectionnement et dans le cas où plusieurs volumes d'utilisation sont programmés avec des paramètres d'utilisations associés à chaque volume, le contrôleur vérifie que ces volumes ne se recoupent pas et sont bien disjoints. Dans le cas contraire, le contrôleur vérifie si les paramètres d'utilisation associés sont identiques. Si ce n'est pas le cas, alors le système de commande ne pourra pas déterminer le paramètre à utiliser lorsque l'outil sera dans le volume commun et dans ce cas l'écran informe l'utilisateur que deux volumes ne joignent et demande de lever l'incertitude concernant le choix des paramètres d'utilisation. L'utilisateur peut alors choisir d'utiliser un ensemble de paramètres dans le volume conjoint. L'utilisateur peut aussi modifier à l'écran la position des points de mesures, en diminuant par exemple le rayon d'une sphère ou en déplaçant un point de mesure pour réduire un volume.

## Revendications

1. Système de commande d'un outil portable (1) associé à un contrôleur (10), comprenant une interface utilisateur (11, 12) permettant d'introduire au moins un paramètre d'utilisation dudit outil, et un moyen de détermination d'une pluralité de positions dudit outil définissant au moins un volume d'utilisation dudit outil, l'outil portable disposant d'un moyen d'introduction d'une commande (6) permettant à un utilisateur de déclencher la mise en marche de l'outil selon au moins un des paramètres d'utilisation introduits; ledit système de commande comportant un moyen de commutation étant commutable par un utilisateur entre :
- un mode apprentissage dans lequel la mise en marche dudit outil selon au moins un des paramètres d'utilisation introduits est inhibée et le système fait l'acquisition de la position de l'outil lors de chaque nouvelle commande introduite par ledit utilisateur sur ledit moyen d'introduction de commande (6), lesdites positions de l'outil ainsi acquises étant utilisées par ledit moyen de détermination pour définir ledit volume d'utilisation dudit outil, et
- un mode utilisation dans lequel il autorise, lorsqu'un utilisateur actionne ledit moyen d'introduction d'une commande (6) et que ledit outil se situe dans l'au moins un volume d'utilisation préalablement défini en mode apprentissage, la mise en marche dudit outil selon au moins un des paramètres d'utilisation introduits.

2. Système de commande selon la revendication 1, **caractérisé en ce que** le moyen d'introduction de commande est du type prise dans l'ensemble suivant : microphone, émetteur récepteur RF-ID, interrupteur, contact à effet Hall.

3. Système de commande selon l'une quelconque des revendications précédentes, **caractérisé en ce qu'**il comporte un moyen d'association de paramètres d'utilisations à au moins deux volumes d'utilisation, le système en mode utilisation transmettant les paramètres d'utilisation associés au volume d'utilisation où se situe l'outil lorsqu'un utilisateur active la commande.

4. Système de commande selon la revendication 3, **caractérisé en ce que** le moyen d'association définit un ordonnancement des opérations à effectuer par ledit outil, le système n'autorisant cet outil à fonctionner que si l'ordre des opérations est respecté.

5. Système de commande selon l'une quelconque des revendications précédentes, **caractérisé en ce qu'**il comporte un moyen de sélection d'une forme géométrique tridimensionnelle parmi une pluralité prédéfinie par le système définissant la forme d'un volume d'utilisation, les positions de l'outil acquises en mode apprentissage définissant les dimensions numériques de ladite forme.

6. Système de commande selon la revendication 5, **caractérisé en ce que** la forme géométrique tridimensionnelle est sélectionnée dans un ensemble comprenant au moins une sphère et une colonne ayant pour base un parallélogramme.

7. Système de commande selon l'une quelconque des revendications précédentes, **caractérisé en ce qu'**il comporte un moyen de réception d'un signal émis par l'outil, tel qu'un signal ultrasonore, et reçu par un moyen de réception capable de déterminer la position de l'émission du signal.

8. Système de commande selon l'une quelconque des revendications précédentes, **caractérisé en ce qu'**il comporte un moyen d'émission d'un signal lumineux et/ou sonores lorsqu'un utilisateur active la commande en mode utilisation et que ledit outil se situe dans un volume autre que les volumes d'utilisation préalablement définis.

9. Système de commande selon l'une quelconque des revendications précédentes, **caractérisé en ce qu'**il comporte un moyen de comparaison des volumes d'utilisation ainsi définis, le moyen de comparaison émettant un message d'alarme lorsque deux volumes d'utilisation associés à des paramètres d'utilisations différents se recoupent.

## Patentansprüche

1. System zur Steuerung eines tragbaren Werkzeugs (1), das mit einer Steuereinrichtung (10) verknüpft ist, umfassend eine Benutzeroberfläche (11, 12), die das Eingeben mindestens eines Verwendungsparameters des Werkzeugs ermöglicht, und ein Mittel zur Bestimmung mehrerer Positionen des Werkzeugs, die mindestens ein Verwendungsvolumen des Werkzeugs festlegen, wobei das tragbare Werkzeug über ein Mittel zur Eingabe einer Steuerung (6) verfügt, das es einem Benutzer ermöglicht, die Inbetriebnahme des Werkzeugs gemäß mindestens einem der eingegebenen Verwendungsparameter auszulösen; wobei das Steuerungssystem ein Schaltmittel umfasst, das durch einen Benutzer schaltbar ist zwischen:
- einem Anlernmodus, in dem die Inbetriebnahme des Werkzeugs gemäß mindestens einem der eingegebenen Verwendungsparameter gesperrt ist und das System die Erfassung der Position des Werkzeugs bei jeder neuen, durch den Benutzer auf dem Mittel zur Eingabe einer Steuerung (6) eingegebenen Steuerung vornimmt, wobei die so erfassten Positionen des Werkzeugs durch das Mittel zur Bestimmung zum Festlegen des Verwendungsvolumens des Werkzeugs verwendet werden, und
- einem Verwendungsmodus, in dem es, wenn ein Benutzer das Mittel zur Eingabe einer Steuerung (6) betätigt und das Werkzeug sich in dem mindestens einen vorhergehend im Anlernmodus festgelegten Verwendungsvolumen befindet, die Inbetriebnahme des Werkzeugs gemäß mindestens einem der eingegebenen Verwendungsparameter erlaubt.

2. System zur Steuerung nach Anspruch 1, **dadurch gekennzeichnet, dass** das Mittel zur Eingabe einer Steuerung vom Typ ist, der in der folgenden Menge enthalten ist: Mikrofon, RF-ID-Sendeempfänger, Schalter, Hall-Effekt-Kontakt.

3. System zur Steuerung nach einem der vorhergehenden Ansprüche, **dadurch gekennzeichnet, dass** es ein Mittel zur Verknüpfung von Verwendungsparametern mit mindestens zwei Verwendungsvolumina umfasst, wobei das System im Verwendungsmodus die Verwendungsparameter übermittelt, die mit dem Verwendungsvolumen verknüpft sind, in dem sich das Werkzeug befindet, wenn ein Benutzer die Steuerung aktiviert.

4. System zur Steuerung nach Anspruch 3, **dadurch gekennzeichnet, dass** das Mittel zur Verknüpfung eine Ablaufplanung der durch das Werkzeug durchzuführenden Vorgänge festlegt, wobei das System diesem Werkzeug nur erlaubt, zu arbeiten, wenn die Reihenfolge der Vorgänge eingehalten wird.

5. System zur Steuerung nach einem der vorhergehenden Ansprüche, **dadurch gekennzeichnet, dass** es ein Mittel zur Auswahl einer dreidimensionalen geometrischen Form unter einer durch das System im Voraus festgelegten Vielzahl umfasst, welche die Form eines Verwendungsvolumens festlegt, wobei die im Anlernmodus erfassten Positionen des Werkzeugs die digitalen Abmessungen der Form festlegen.

6. System zur Steuerung nach Anspruch 5, **dadurch gekennzeichnet, dass** die dreidimensionale geometrische Form aus einer Menge ausgewählt wird, die mindestens eine Kugel und eine Säule umfasst, die als Basis ein Parallelogramm aufweist.

7. System zur Steuerung nach einem der vorhergehenden Ansprüche, **dadurch gekennzeichnet, dass** es ein Mittel zum Empfang eines Signals, wie beispielsweise eines Ultraschallsignals, umfasst, das von dem Werkzeug gesendet und von einem Empfangsmittel empfangen wird, das in der Lage ist, die Position der Sendung des Signals zu bestimmen.

8. System zur Steuerung nach einem der vorhergehenden Ansprüche, **dadurch gekennzeichnet, dass** es ein Mittel zur Sendung eines Licht- und/oder Schallsignals umfasst, wenn ein Benutzer die Steuerung im Verwendungsmodus aktiviert und das Werkzeug sich in einem Volumen befindet, das sich von den vorhergehend festgelegten Verwendungsvolumina unterscheidet.

9. System zur Steuerung nach einem der vorhergehenden Ansprüche, **dadurch gekennzeichnet, dass** es ein Mittel zum Vergleich der so festgelegten Verwendungsvolumina umfasst, wobei das Mittel zum Vergleich eine Alarmnachricht sendet, wenn zwei Verwendungsvolumina, die mit verschiedenen Verwendungsparametern verknüpft sind, sich überschneiden.

## Claims

1. A system for controlling a portable tool (1) associated with a controller (10), comprising a user interface (11, 12) allowing to enter at least one parameter of use of said tool, and a means for determining a plurality of positions of said tool defining at least one volume of use of said tool, the portable tool having a command input means (6) allowing a user to trigger the starting of the tool according to at least one of the parameters of use entered;
said system for controlling including a switching means being able to be switched by a user between:
- a learning mode wherein the starting of said tool according to at least one of the parameters of use entered is inhibited and the system acquires the position of the tool during each new command entered by said user on said command input means (6), said positions of the tool thus acquired being used by said determination means to define said volume of use of said tool, and
- a mode of use wherein it authorises, when a user actuates said command input means (6) and said tool is located in the at least one volume of use previously defined in learning mode, the starting of said tool according to at least one of the parameters of use entered.

2. The system for controlling according to claim 1, **characterised in that** the command input means is of the type taken from the following set: microphone, RF-ID transmitter-receiver, switch, Hall effect contact.

3. The system for controlling according to any one of the preceding claims, **characterised in that** it includes a means for associating use parameters with at least two volumes of use, the system in mode of use transmitting the parameters of use associated with the volume of use where the tool is located when a user activates the command.

4. The system for controlling according to claim 3, **characterised in that** means for associating defines an order of the operations to be performed by said tool, the system only allowing this tool to operate if the order of operations is respected.

5. The system for controlling according to any one of the preceding claims, **characterised in that** it includes a means for selecting a three-dimensional geometric shape from a plurality predefined by the system defining the shape of a volume of use, the positions of the tool acquired in learning mode defining the numerical dimensions of said shape.

6. The system for controlling according to claim 5, **characterised in that** the three-dimensional geometric shape is selected from a set comprising at least one sphere and one column having a parallelogram as its base.

7. The system for controlling according to any one of the preceding claims, **characterised in that** it includes a means for receiving a signal emitted by the tool, such as an ultrasound signal, and received by a receiving means capable of determining the position of emission of the signal.

8. The system for controlling according to any one of the preceding claims, **characterised in that** it includes a means for emitting a light and/or sound signal when a user activates the command in the mode of use and said tool is located in a volume other than the previously defined volumes of use.

9. The system for controlling according to any one of the preceding claims, **characterised in that** it includes a means for comparing the volumes of use thus defined, the means for comparing emitting an alarm message when two volumes of use associated with different parameters of use overlap.
